# EUROPEAN PATENT APPLICATION

(11) **EP 4 808 108 A1**
(43) Date of publication of application: **16.09.2026**
(21) Application number: 24888546.9
(22) Date of filing: 24.10.2024
(51) Int. Cl.: H04N 5/92, H04N 5/77, H04N 23/60

(54) **IMAGING APPARATUS AND CONTROL METHOD FOR SAME**

(30) Priority: 10.11.2023 JP 2023192351
(71) Applicant: Canon Kabushiki Kaisha, Tokyo 146-8501 (JP)
(72) Inventor: SATO Akihiko, Tokyo 146-8501 (JP); NISHIZUMI Kuya, Tokyo 146-8501 (JP); YANAGISAWA Takuma, Tokyo 146-8501 (JP)
(74) Representative: TBK
(86) International application number: PCT/JP2024/037934
(87) International publication number: WO 2025/100249

(57) **Abstract**

Disclosed is an image capture apparatus that is capable of automatically recording text information that describes a captured scene. The image capture apparatus generates a prompt from image data obtained by an image capture means, the prompt being text information that describes a captured scene of an image represented by the image data. The image capture apparatus may record the prompt.

## Description

### TECHNICAL FIELD

The present invention relates to an image capture apparatus and a control method therefor.

### BACKGROUND ART

Conventionally, image capture apparatuses have provided a function of recording captured scenes as still images and moving images. In a case where image data obtained through image capture is recorded in accordance with a data format described in NPL 1, conventional image capture apparatuses can record information related to the state of the image capture apparatuses at the time of image capture, such as a captured position and capture parameters, in association with the image data. However, there have been no image capture apparatuses that provide a function of automatically recording text information that describes captured scenes.

### CITATION LIST

### NON-PATENT LITERATURE

NPL 1: "CIPA DC-008-2023, Exchangeable image file format for digital still cameras: Exif Version 3.0", [online], formulated in May 2023, Camera & Imaging Products Association, [retrieved on October 27, 2023], the Internet <URL: https://www.cipa.jp/std/documents/download_j.html?DC-008-2023-J>

### SUMMARY OF INVENTION

### TECHNICAL PROBLEM

The present invention provides, in an embodiment thereof, an image capture apparatus capable of automatically recording text information that describes a captured scene.

### SOLUTION TO PROBLEM

The present invention provides, in an aspect thereof, an image capture apparatus characterized by including: image capture means; generation means for generating a prompt from image data obtained by the image capture means, the prompt being text information that describes a captured scene of an image represented by the image data; and recording means for recording the prompt.

### ADVANTAGEOUS EFFECTS OF INVENTION

According to the present invention, an image capture apparatus capable of automatically recording text information that describes a captured scene can be provided.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1A is a diagram showing an exemplary configuration of a digital camera 100 of an embodiment.
FIG. 1B is a diagram showing an exemplary configuration of the digital camera 100 of an embodiment.
FIG. 2 is a diagram showing an exemplary configuration of a prompt generation unit 102 of an embodiment.
FIG. 3 is a flowchart showing capture processing of a first embodiment.
FIG. 4 is a flowchart showing prompt generation processing of the first embodiment.
FIG. 5 is a diagram for describing the capture processing of the first embodiment.
FIG. 6 is a flowchart showing capture processing of a second embodiment.
FIG. 7 is a flowchart showing prompt generation processing of the second embodiment.
FIG. 8 is a diagram for describing the capture processing of the second embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Note that the following embodiments will be described in relation to a case where the present invention is embodied in a digital camera. However, the present invention can also be embodied in any electronic devices with an image capture function. Such electronic devices include a video camera, a computer device (a personal computer, a tablet computer, a media player, a PDA, or the like), a mobile telephone device, a smartphone, a game device, a robot, a drone, and a driving recorder. These are examples, and the present invention can also be embodied in other electronic devices.

### • <First Embodiment>

### <Exemplary Functional Configuration of Digital Camera>

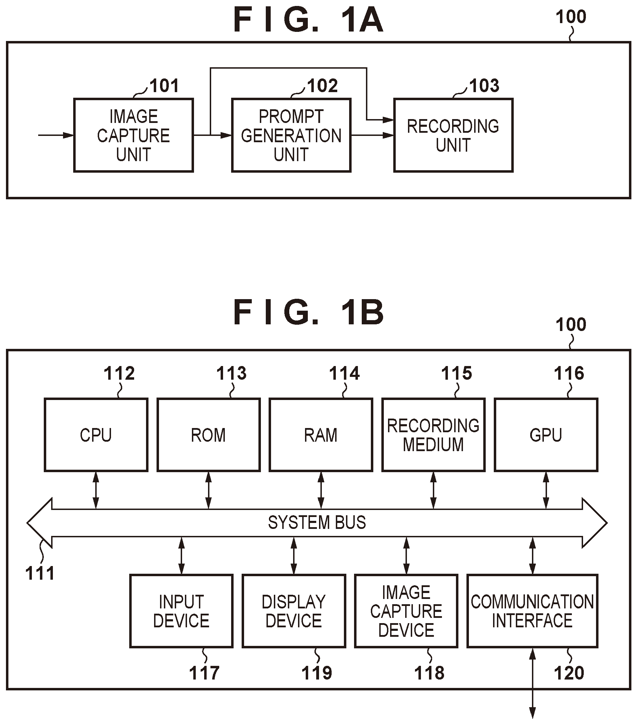

FIG. 1A is a block diagram showing an exemplary functional configuration of a digital camera 100 as an image capture apparatus according to a first embodiment. Throughout the entire drawings, a functional block can be embodied by software, or a combination of software and hardware, except for parts that can obviously be realized only by hardware (e.g., a lens, an image sensor, a recording medium, and the like). For example, a functional block may be realized by dedicated hardware, such as an ASIC. Also, a functional block may be realized by one or more processors that can execute programs, such as a CPU, executing programs stored in a memory. Note that a plurality of functional blocks may be realized by the same configuration (e.g., one ASIC). Furthermore, hardware that realizes a part of functions of a certain functional block may be included in hardware that realizes another functional block.

To facilitate the description and understanding of the embodiment, FIG. 1A shows only an image capture unit 101, a prompt generation unit 102, and a recording unit 103 as functional blocks of the digital camera 100. However, the functions of the digital camera 100 are not limited to the functions realized by the functional blocks shown in FIG. 1A.

The image capture unit 101 obtains RAW image data corresponding to an optical image of an object with use of, for example, the lens and the image sensor. Also, the image capture unit 101 generates image data that suits an intended use by applying image processing that has been set in advance to the RAW image data. Here, the intended use may be recording, display, or prompt generation, for example. Note that image data for recording or for display may be used as image data for prompt generation, or image data for prompt generation may be generated based on image data for recording or for display.

Also, the image capture unit 101 may supply, to the prompt generation unit 102, a part of attribute information recorded in a data file that stores image data for recording (e.g., one or more of tags related to picture-taking conditions and shooting situation in attribute information indicated by table 8 and table 9 of NPL). Furthermore, any information that can be obtained by the image capture unit 101, such as information related to the characteristics of the image sensor and evaluation values used in exposure control, can be supplied to the prompt generation unit 102.

The prompt generation unit 102 generates text information (prompt) that describes a captured scene indicated by image data from image data and various types of information that are supplied from the image capture unit 101.

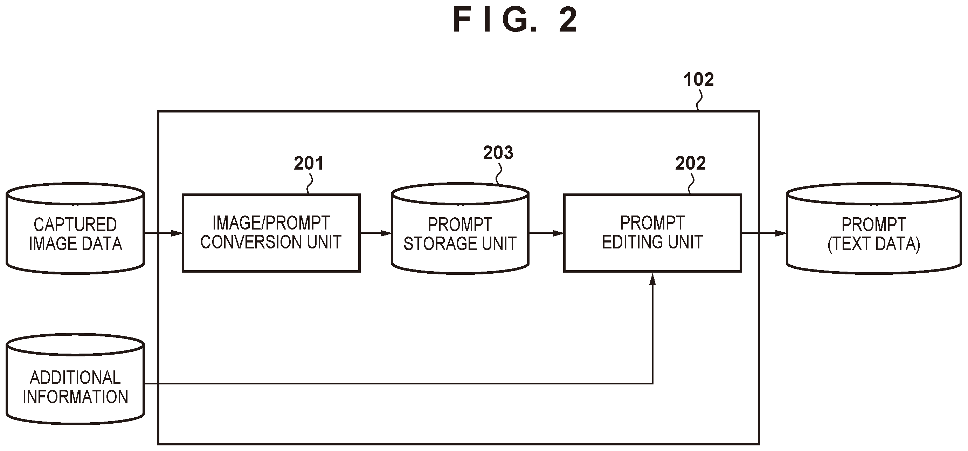

FIG. 2 is a block diagram showing an exemplary functional configuration of the prompt generation unit 102. The prompt generation unit 102 includes at least an image/prompt conversion unit 201 and a prompt editing unit 202.

Using a multimodal AI learning model, the image/prompt conversion unit 201 converts image data into text information that describes a captured scene of an image represented by image data. The multimodal AI learning model may be stored in advance in, for example, the digital camera 100, or may exist in an external apparatus with which the digital camera 100 can communicate. The multimodal AI learning model according to the present embodiment is a neural network that has been trained using image data and text data that is related to a captured scene associated with the image data, such as a caption and a tag.

The multimodal AI learning model outputs text data corresponding to input image data. The text data is text data that describes a captured scene of an image represented by the image data. Such a multimodal AI learning model can be realized using, for example, a known technique described in the following document. Lili Yu and 25 others, "Scaling Autoregressive Multi-Modal Models: Pretraining and Instruction Tuning", July 14, 2023, Meta Research website, the Internet <URL: https://ai.meta.com/research/publications/scaling-autoregressive-multi-modal-models-pretraining-and-instruction-tuning>

Note that the image/prompt conversion unit 201 may obtain a prompt from an external apparatus with which the digital camera 100 can communicate. In this case, the image/prompt conversion unit 201 transmits image data for prompt generation (and other pieces of information as necessary) to the external apparatus. Then, the image/prompt conversion unit 201 receives the prompt that the external apparatus has generated with respect to the image data.

The image/prompt conversion unit 201 obtains prompts with regard to respective pieces of image data corresponding to a plurality of images (frames), and stores them into a storage unit 203.

The prompt editing unit 202 generates a final prompt (text data) based on the plurality of prompts stored in the storage unit 203, and outputs the final prompt to the recording unit 103. The prompt editing unit 202 generates one prompt from the plurality of prompts with use of attribute information as appropriate.

The recording unit 103 records the prompt output from the prompt generation unit 102 into a recording destination. The recording destination may be a recording medium or a storage apparatus included in the digital camera 100, or may be an external apparatus with which the digital camera 100 can communicate.

### <Exemplary Hardware Configuration of Digital Camera>

FIG. 1B is a block diagram showing an exemplary hardware configuration of the digital camera 100. Functional blocks are connected in such a manner that they can communicate with one another via a system bus 111.

Each of a CPU (Central Processing Unit) 112 and a GPU (Graphics Processing Unit) 116 is one or more processors that can execute programs. The GPU 116 is configured to be capable of executing specific computations at a higher speed than the CPU 112, and is often used to particularly execute inference processing that uses a neural network at high speed in recent years. In place of the GPU 116, an NPU (Neural Processing Unit) that is more specialized in the execution of learning and inference processing that use a neural network may be used. Note that instead of using the CPU 112 and the GPU 116 that are distinct from each other, an SoC (System on Chip) obtained by integrating a CPU and a GPU (and further an NPU in some cases) may be used.

The CPU 112 realizes each functional block described in FIG. 1 and FIG. 2 by, for example, reading in programs stored in a ROM 113 to a RAM 114 and executing the programs. The CPU 112 realizes high-speed processing by utilizing the GPU 116 in processing that uses a neural network. Note that the GPU 116 may include a dedicated RAM different from the RAM 114.

The ROM 113 is, for example, an electrically rewritable nonvolatile memory. The ROM 113 stores programs that can be executed by the CPU 112, setting values, GUI data, parameters for realizing a trained neural network (learning model), and so forth.

The RAM 114 is used to read in programs to be executed by the CPU 112, and to save values that are necessary during the execution of programs.

A recording medium 115 is, for example, a semiconductor memory card, an SSD (Solid State Drive), or the like, and is used as a recording destination of image data obtained through image capture. Furthermore, the recording medium 115 is also used as a recording destination of a prompt generated by the prompt generation unit 102. In a case where both of a prompt and image data that is a source of the prompt are recorded into the recording medium 115, they may be associated with each other. For example, a prompt that has been generated using image data can be recorded as metadata that is recorded into a data file that stores the image data. In a case where a prompt is generated based on a plurality of pieces of image data, information of all of the pieces of image data used in the generation of the prompt (e.g., data file names) may be recorded together with the prompt.

An input device 117 includes a plurality of operation members that accept operational inputs to the digital camera 100, such as buttons, dials, switches, and a touch panel. Also, the input device 117 may include one or more devices (e.g., sensors) for obtaining additional information at the time of image capture.

For example, the input device 117 can include, but is not limited to
· a GPS receiver for obtaining position information of the digital camera 100,
· a clock for obtaining the capture date and time,
· a thermometer for measuring the air temperature of a capture environment,
· a sensor that detects a magnitude and a direction of a motion of the digital camera 100 (a gyro sensor, an acceleration sensor, or the like), and
· a microphone for obtaining sounds in the capture environment.

An image capture device 118 includes, for example, an optical system unit, such as a lens, a diaphragm, and a shutter, and an image sensor. The optical system unit may include a stereoscopic lens and a multiscopic lens. Also, the optical system unit may be capable of changing such optical characteristics as zooming and a diaphragm (in accordance with, for example, an image content to be obtained). The image sensor may be, for example, a CMOS color image sensor that includes color filters of the primary-color Bayer arrangement.

A display device 119 is, for example, a liquid crystal display provided on a surface of a housing of the digital camera 100. The display device 119 may be a touch display. The display device displays live-view images or images that have been read out from the recording medium 115, a menu screen, and information of the digital camera 100 (e.g., setting values, a remaining battery amount, a remaining number of images that can be captured, and so forth).

A communication interface 120 is a circuit for performing communication with an external apparatus in accordance with one or more communication standards. It includes a connector for wired communication, an antenna for wireless communication, a transmission and reception circuit, and the like. The digital camera 100 can transmit image data to the external apparatus, and receive data from the external apparatus, via the communication interface 120. Representative communication standards to which the communication interface 120 conforms include, but are not limited to, HDMI^{®}, USB, Bluetooth^{®}, wireless LAN (Wi-Fi), and the like.

The functional blocks shown in FIG. 1A and FIG. 2 are realized by one or more of the items of hardware shown in FIG. 1B. For example, the image capture unit 101 is realized mainly by the CPU 112 and the image capture device 118. Also, the prompt generation unit 102 is realized mainly by the CPU 112 and the GPU 116. Note that the RAM 114 and the ROM 113 are used in various types of processing as a temporary storage of data to be processed, data currently processed, data of a processing result, and the like, and as a reference destination of setting values, programs, and the like that have been stored in advance, respectively.

### <Operations at Time of Capture Processing>

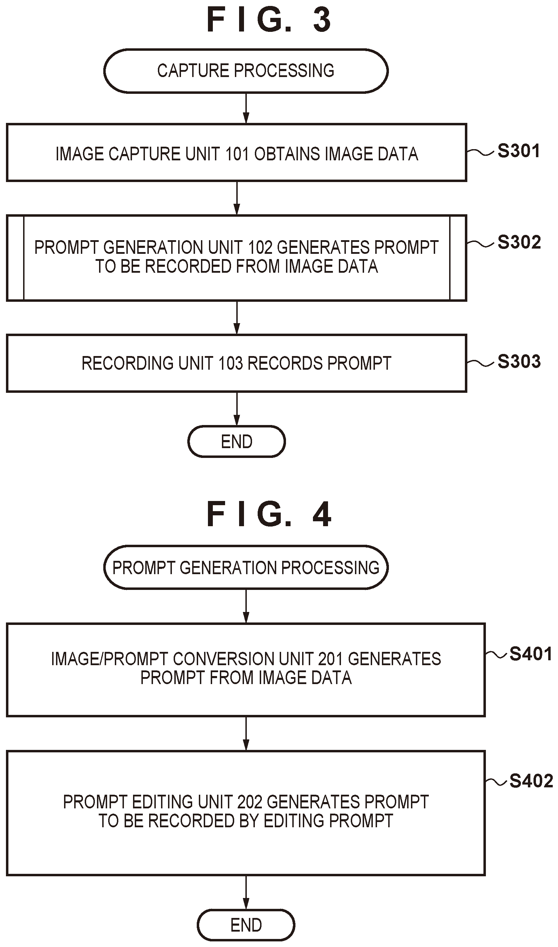

Still image capture operations of the digital camera 100 will be described with reference to FIG. 1 to FIG. 5. Operations of steps in the flowcharts of FIG. 3 to FIG. 5 are realized by the CPU 112 or the GPU 116 executing programs stored in the ROM 113 and controlling other items of hardware as necessary.

Furthermore, still image capture performed by the digital camera 100 is executed in response to an instruction via the input device 117, and may also be executed in accordance with a condition which is other than an instruction and which has been set in advance. For example, image capture may be executed continuously at a constant time interval, or still image capture may be executed when information obtained from moving images captured for live-view display has satisfied a predetermined condition.

Note that the CPU 112 can decide on exposure parameters at the time of still image capture based on, for example, luminance information obtained from moving images captured for live-view display and the like. Similarly, the CPU 112 can also control the focusing distance of the lens at the time of still image capture based on, for example, contrast information obtained from moving images captured for live-view display and the like.

In step S301, the image capture unit 101 executes still image capture and obtains image data. Note that the image capture unit 101 may execute moving image capture and use a frame image of moving images as still image data. The image capture unit 101 outputs the obtained image data and the aforementioned attribute information to the prompt generation unit 102. Note that the image capture unit 101 outputs image data after so-called development processing. In the image data after the development processing, pixel data composing the image data includes three components (RGB or YCbCr). Note that the image capture unit 101 may output the image data after, for example, processing the image data so that the image data is in a state where it is appropriate for use by the prompt generation unit 102.

In a case where the image data is also recorded in addition to a prompt, the image capture unit 101 outputs the image data and the attribute information to the recording unit 103 as well. For example, the image capture unit 101 may output, to the recording unit 103, the image data to which processing corresponding to a data format for recording in the recording unit 103 (e.g., encoding processing) has been applied.

In step S302, the prompt generation unit 102 generates, from the image data output from the image capture unit 101, text information (prompts) that describes captured scenes of images indicated by pieces of image data corresponding to one or more frames.

Now, operations of the prompt generation unit 102 will be further described using FIG. 2 and a flowchart shown in FIG. 4.

In step S401, the image/prompt conversion unit 201 generates, from input image data, text information (a prompt) that describes a captured scene of an image represented by the image data. The image/prompt conversion unit 201 stores the generated prompt into the storage unit 203 (RAM 114).

As described above, the image/prompt conversion unit 201 can obtain the prompt by inputting the image data to the learning model stored in the ROM 113. Alternatively, the image/prompt conversion unit 201 may transmit the image data to an external apparatus, and receive the prompt from the external apparatus, via the communication interface 120.

The degree of detail of the prompt generated by the image/prompt conversion unit 201 can be changed by a setting. For example, a prompt that states only a sex can be generated with respect to a human object in a case where the degree of detail is set to be low, and a prompt that states a sex, an age, a hair color and length, and the like can be generated in a case where the degree of detail is set to be high.

Furthermore, the image/prompt conversion unit 201 may generate a prompt that includes not only statements related to elements included in the image (positive prompts), but also statements related to elements that are not included in the image (negative prompts).

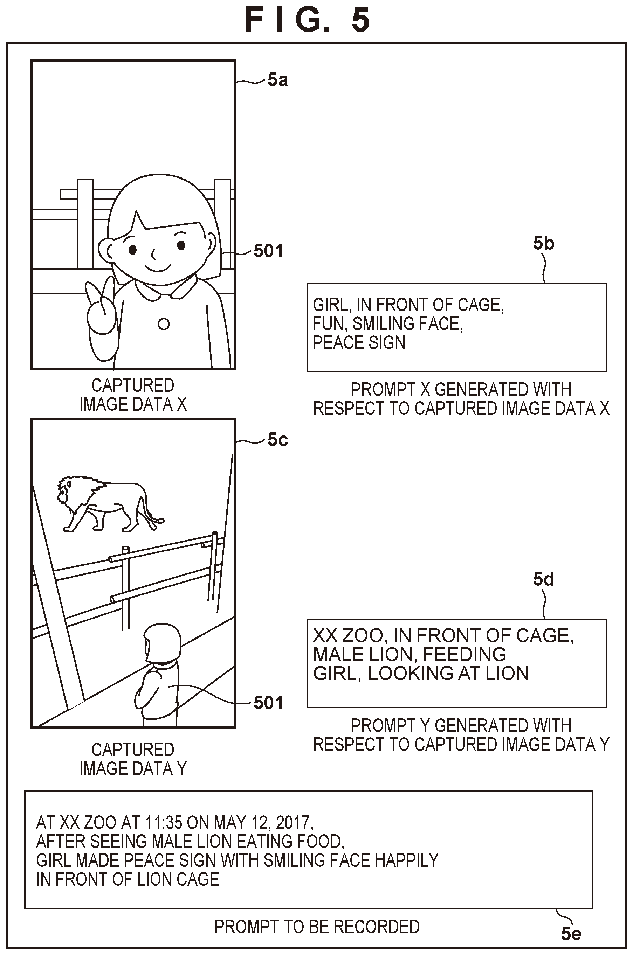

5a and 5b of FIG. 5 respectively show an example of an image represented by the image data and an example of a prompt generated from the image data. The image/prompt conversion unit 201 stores prompts that have been generated for respective pieces of image data into the storage unit 203 (RAM 114).

The image/prompt conversion unit 201 generates a prompt for each piece of image data corresponding to one frame that is supplied from the image capture unit 101 as a prompt generation target, and stores the generated prompt into the storage unit 203.

In step S402, the prompt editing unit 202 generates a final prompt by applying predetermined edit processing to the prompts stored in the RAM 114, and outputs the final prompt to the recording unit 103.

The edit processing is an operation of generating a final prompt from pieces of additional information at the time of image capture of pieces of image data that are the sources of the prompts, as well as prompts that have been generated with respect to other pieces of image data that are highly relevant and pieces of additional information at the time of image capture thereof.

Specific examples of the edit processing include, but are not limited to (1) adding, to one prompt, additional information at the time of image capture of image data that is a source of the prompt, or information based on the additional information, and (2) generating one prompt from prompts that have been generated with respect to pieces of image data corresponding to a plurality of other frames that are highly relevant, in consideration of pieces of additional information at the time of image capture as necessary.

Whether to execute the edit processing, and what kind of edit processing is to be executed, can be set by a user, for example. For example, editing for the setting of "per image capture" corresponds to (1), and editing for the setting of "per event" corresponds to (2). Other settings, such as "every 10 minutes", may be settable. In a case where the edit processing is not executed, the prompt editing unit 202 outputs the prompts generated by the image/prompt conversion unit 201, as is, to the recording unit 103. Note that even in a case where the edit processing is executed, the prompts that have not been edited may be output to the recording unit 103.

Examples of the pieces of image data that are highly relevant include, but are not limited to
(a) pieces of image data that are different in at least one of the capture date and time and the capture position by a threshold that has been set in advance or less,
(b) pieces of image data that show the same object or similar objects,
(c) pieces of image data that hold an inter-image correlation equal to or higher than a threshold, and
(d) pieces of image data for which prompts including the same keyword have been generated.
Note that pieces of image data that satisfy a condition of a combination of two or more of (a) to (d) may be regarded as pieces of image data that are highly relevant.

For example, in a case where editing for "per event" has been set, the prompt editing unit 202 can regard pieces of image data that satisfy (a), both of (a) and (b), or (a), (b), and (d) as pieces of image data that are highly relevant.

It is assumed here that a setting to execute editing per event or every constant time period has been set, and pieces of image data of two frames indicated by 5a and 5c in FIG. 5, which are close to each other in terms of the capture date and time and which show the same object 501, have been considered as pieces of image data that are highly relevant.

In this case, the prompt editing unit 202 generates one prompt (5e in FIG. 5) by applying edit processing to a prompt X (5c in FIG. 5) and a prompt Y (5d in FIG. 5) that have been generated in relation to the respective pieces of image data.

In an example shown in FIG. 5, the prompt editing unit 202 generates a final prompt by applying edit processing for merging the contents of the prompts X and Y in line with the sequential relationship of the capture dates and times (i.e., in line with the captured order of the images), and edit processing for adding additional information related to the capture dates and times. When merging prompts, the prompt editing unit 202 can add particles, conjunctions, and the like as necessary by using, for example, an existing composition AI technique, thereby generating a prompt with a natural written expression. Also, when merging a plurality of prompts, the expression of the merged prompts may be changed in consideration of the appearance frequency of terms; for example, a term with a high appearance frequency may be emphasized in the merged prompts.

Returning to FIG. 3, in step S303, the recording unit 103 records the prompt generated by the prompt generation unit 102 in step S302 into the recording medium 115. Note that the recording unit 103 may record only the prompt, or may record the prompt and the image data that was used in the generation of the prompt in association with each other. In a case where the prompt has been generated based on prompts and pieces of additional information related to pieces of image data of a plurality of frames, the same prompt may be associated with each individual piece of image data, or the prompt may be associated only with a representative piece of image data.

A method of associating a prompt and image data with each other may be any known method. For example, the prompt and the image data may be included in the same file container, or the prompt and the image data may be recorded as different files with file names that have a commonality with each other.

Note that the recording unit 103 may apply digital certification processing to a prompt and image data that was used in the generation of the prompt, and then record them. It is sufficient for the digital certification processing to be processing that aims to guarantee the contents of the prompt and the image data. For example, it may be processing for granting an NFT (non-fungible token).

As described above, the present embodiment can give a function of generating text data (a prompt) that describes a captured scene to an image capture apparatus that has exclusively provided an image capture function conventionally. This makes it easy to, for example, provide a third party with information related to a captured scene in the form of text. Also, the generated prompt can be input to an image generative AI and utilized for the purpose of generating an image of a similar scene. Furthermore, when an image is viewed at a later time, it becomes easy to recall the situation at the time of image capture by looking at a prompt, and convenience is improved.

### • <Second Embodiment>

Next, a second embodiment of the present invention will be described. As the present embodiment can be embodied in the digital camera 100 described in the first embodiment, a description of the contents described in the first embodiment will be omitted.

The second embodiment relates to operations of the digital camera 100 for a case where image data obtained by the image capture unit 101 performing image capture with use of exposure parameters that are currently set is inappropriate for generation of a prompt in the image/prompt conversion unit 201.

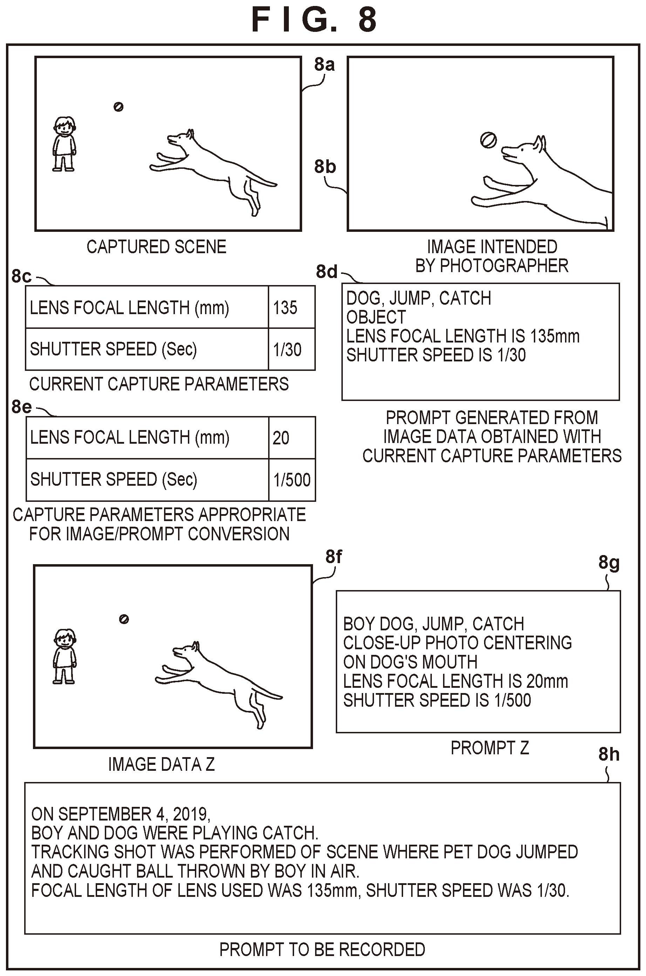

A description will be provided using a captured scene indicated by 8a in FIG. 8 as an example. 8a in FIG. 8 indicates an example of a scene where "a dog jumps and catches a ball thrown by a boy". Also, a photographer is attempting to capture, in a tracking shot, an image that grasps a moment when the dog is located at the center of the image and the dog catches the ball in the air. Furthermore, it is assumed that the photographer has set the focal length of the lens and the shutter speed as indicated by 8c in FIG. 8 as capture parameters appropriate for the composition and tracking shot.

It is also assumed that data of an image indicated by 8b in FIG. 8 has been obtained through image capture. It is further assumed that the image/prompt conversion unit 201 has obtained a prompt indicated by 8d in FIG. 8 from the data of the image indicated by 8b in FIG. 8.

However, the statements of the prompt are "dog", "jumps and catches", and "object", and do not include information of the "boy" and "ball". This is because the "boy" is not shown in the image with the angle of view intended by the photographer, and the "ball" is not distinguishable from the image data as objects other than objects that exhibit the same motion as the "dog" are blurry in the image obtained through the tracking shot.

In this way, with the following capture parameters, the amount of information included in a prompt that is generated from an image obtained through image capture can decrease, and the usefulness of the prompt can decline.
· the photographer takes a close-up of a part of a captured scene (the angle of view is narrower than a threshold)
· a blurry range becomes large (a tracking shot mode or an f-number close to the maximum aperture (smaller than a threshold) has been set) · a camera shake occurs easily (a slow shutter speed equal to or lower than a threshold has been set)
· noise easily increases (a capture sensitivity equal to or higher than a threshold has been set)
· underexposed or overexposed, by a threshold or more, compared to exposure parameters that achieve correct exposure
Note that these are merely examples.

In the present embodiment, in a case where it is determined that image data obtained with use of the current capture parameters is inappropriate for generation of a prompt that includes sufficient information, the current capture parameters are changed to capture parameters that have a high possibility of achieving an image that is more appropriate for generation of a prompt.

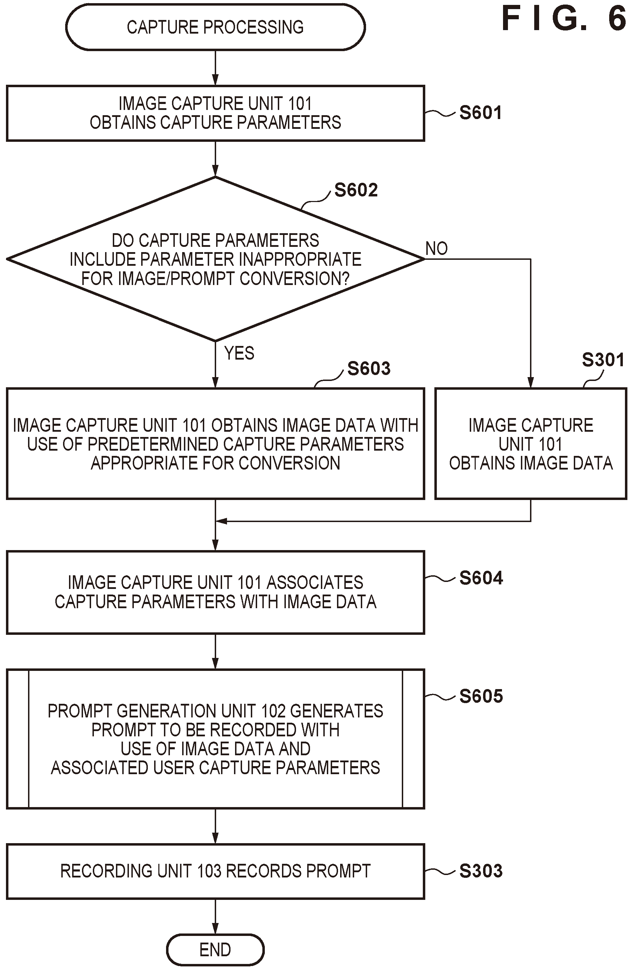

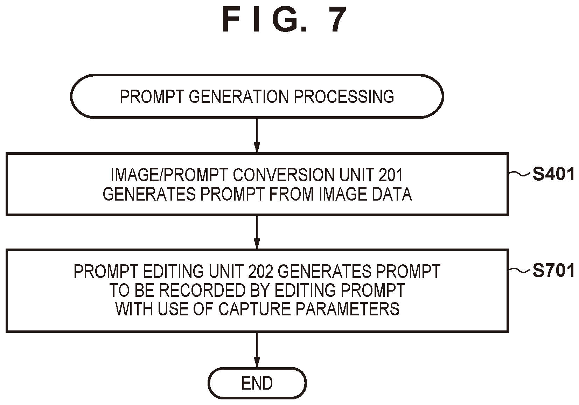

The following describes still image capture processing of the digital camera 100 of the present embodiment with use of FIG. 6 to FIG. 8. In FIG. 6 and FIG. 7, steps that execute operations similar to those of the first embodiment are given the same reference numerals as in FIG. 3 or FIG. 4, and a description thereof is omitted.

In step S601, the image capture unit 101 obtains current capture parameters. The capture parameters obtained here are not limited to exposure parameters (especially the f-number and the shutter speed), and may include a capture mode and the angle of view of the lens. In the example shown in FIG. 8, the focal length (angle of view) of the lens and the shutter speed are used as capture parameters.

In step S602, the image capture unit 101 (CPU 112) determines whether there is a high possibility that image data obtained through image capture with the current capture parameters is inappropriate for generation of a prompt. This determination may be made by comparing thresholds that are determined in advance for respective items of the capture parameters with current setting values. Note that the thresholds may change dynamically. For example, the threshold for the shutter speed can have a value corresponding to the current focal length of the lens.

If the current capture parameters include at least one item that is inappropriate for generation of a prompt, the CPU 112 determines that there is a high possibility that image data obtained through image capture with the current capture parameters is inappropriate for generation of a prompt. The CPU 112 executes step S603 if it has been determined that there is a high possibility that image data obtained through image capture with the current capture parameters is inappropriate for generation of a prompt, and step S607 if it has not been thus determined.

In step S603, the image capture unit 101 executes image capture with use of capture parameters (8e in FIG. 8) that achieve image data appropriate for generation of a prompt, in place of the current capture parameters (8c in FIG. 8). The capture parameters that achieve image data appropriate for generation of a prompt can be stored in advance in the ROM 113. It is assumed that the capture parameters that achieve image data appropriate for generation of a prompt are capture parameters that achieve a wide-angle image in a deep-focus state. It is assumed here that data Z of an image indicated by 8f in FIG. 8 has been obtained using the capture parameters indicated by 8e in FIG. 8.

In step S604, the image capture unit 101 stores the image data Z (8f in FIG. 8) that has been obtained using the changed capture parameters and the original capture parameters before the change (8c in FIG. 8) into the RAM 114 in association with each other.

In step S605, the prompt generation unit 102 generates a prompt to be recorded with use of the image data Z and the original capture parameters, which have been saved in the RAM 114 in step S604, and additional information. The prompt generation unit 102 outputs the generated prompt to the recording unit 103.

Operations of the prompt generation unit 102 in step S605 of FIG. 6 will be described using a flowchart shown in FIG. 7.

Step S401 is as described in the first embodiment, and thus a description thereof is omitted. It is assumed that a prompt Z indicated by 8g in FIG. 8 has been obtained as a result of processing. The prompt Z, the original capture parameters, and the additional information are stored in the storage unit 203 (RAM 114).

In step S701, the prompt editing unit 202 applies edit processing that uses the original capture parameters indicated by 8c in FIG. 8 to the prompt Z, thereby generating a prompt to be recorded. The prompt editing unit 202 outputs the generated prompt to the recording unit 103.

In the edit processing, the prompt editing unit 202 applies the edit processing described in step S402 to the prompt Z generated from the image data, which is indicated by 8g in FIG. 8. Note that, as indicated by 8h in FIG. 8, the capture parameters added to the prompt are the capture parameters that were originally set, rather than the capture conditions that were actually used.

As steps S301 and S303 are as described in the first embodiment, a description thereof is omitted.

As described above, according to the present embodiment, in a case where it is determined that image data obtained with the current capture parameters is inappropriate for generation of a prompt, image capture is performed with the capture parameters that achieve image data appropriate for generation of a prompt. Meanwhile, in a case where capture parameters are to be added to a prompt, pre-change capture parameters that were originally set are added; in this way, the capture parameters intended by the photographer are reflected in a prompt.

Therefore, even in a case where capture parameters that have a high possibility of achieving image data that is inappropriate for generation of a prompt have been set, it is possible to realize an advantageous effect where a prompt which includes appropriate types of information, and which reflects the capture parameters intended by the photographer, can be generated.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not restricted to the contents of the above-described embodiments, and various changes and modifications are possible without departing from the spirit and the scope of the invention. Therefore, to apprise the public of the scope of the invention, the following claims are made.

The present application claims the benefit of priority from Japanese Patent Application No. 2023-192351 filed on November 10, 2023, which is hereby incorporated by reference herein in its entirety.

## Claims

1. An image capture apparatus, **characterized by** comprising:
image capture means;
generation means for generating a prompt from image data obtained by the image capture means, the prompt being text information that describes a captured scene of an image represented by the image data; and
recording means for recording the prompt.

2. The image capture apparatus according to claim 1, **characterized in that**
the generation means adds information at a time of image capture of the image data to the prompt.

3. The image capture apparatus according to claim 2, **characterized in that**
the information includes one or more of exposure parameters, position information, an air temperature, and a magnitude and a direction of motion of the image capture apparatus at the time of image capture.

4. The image capture apparatus according to any one of claims 1 to 3, **characterized in that**
the generation means generates one prompt from prompts generated respectively for pieces of image data corresponding to a plurality of frames obtained by the image capture means.

5. The image capture apparatus according to claim 4, **characterized in that**
the generation means generates the one prompt by merging the prompts generated respectively for the pieces of image data corresponding to the plurality of frames, with consideration given to a captured order of the pieces of image data.

6. The image capture apparatus according to claim 4 or 5, **characterized in that**
the pieces of image data corresponding to the plurality of frames are one of:
(a) pieces of image data that are different in at least one of a capture date and time and a capture position by less than or equal to a threshold set in advance;
(b) pieces of image data that show a same object or similar objects;
(c) pieces of image data that have an inter-image correlation that is higher than or equal to a threshold; and
(d) pieces of image data for which prompts including a same keyword were generated.

7. The image capture apparatus according to any one of claims 1 to 6, **characterized in that**
in a case where image data obtained in accordance with current capture parameters is determined to be inappropriate for generation of the prompt by the generation means, the image capture means obtains the image data in accordance with capture parameters that have been set in advance, and
in a case where capture parameters are to be included in the prompt, the generation means includes the current capture parameters in the prompt.

8. The image capture apparatus according to claim 7, **characterized in that**
the image capture means makes the determination based on one of an angle of view, a capture mode, an f-number, a shutter speed, and a capture sensitivity among the current capture parameters.

9. The image capture apparatus according to any one of claims 1 to 8, **characterized in that**
the recording means records the prompt in association with the image data.

10. The image capture apparatus according to any one of claims 1 to 9, **characterized in that**
the generation means generates the prompt with use of a multimodal AI learning model.

11. The image capture apparatus according to any one of claims 1 to 9, **characterized in that**
the generation means transmits the image data to an external apparatus, and obtains a prompt corresponding to the image data from the external apparatus.

12. A control method executed by an image capture apparatus, **characterized by** comprising:
generating a prompt from image data obtained by an image capture means, the prompt being text information that describes a captured scene of an image represented by the image data; and
recording the prompt.

13. A program for causing a computer to function as the generation means and the recording means included in the image capture apparatus according to any one of claims 1 to 11.
